# EUROPÄISCHE PATENTANMELDUNG

(11) **EP 0 532 824 A1**
(43) Veröffentlichungstag der Anmeldung: **24.03.1993**
(21) Anmeldenummer: 92103309.8
(22) Anmeldetag: 27.02.1992
(51) Int. Cl.: B23B 31/20

(54) **Standardschaft für rotierende Bearbeitungswerkzeuge zur unmittelbaren Aufnahme in eine Arbeitsspindel einer Werkzeugmaschine**

(30) Priorität: 28.08.1991 DE 4128463
(71) Anmelder: MERCEDES-BENZ AG, D-70327 Stuttgart (DE)
(72) Erfinder: Krämer, Johann, Dr. rer. nat., W-7250 Leonberg 7 (DE); Teusch, Bruno, W-7300 Esslingen (DE); Renz, Rainer, Dr.-Ing., W-7000 Stuttgart (DE); Jenuwein, Dieter, Dipl.-Ing., W-7000 Stuttgart 75 (DE)

(57) **Zusammenfassung**

Die Erfindung betrifft einen zylindrischen Standardschaft (1) für rotierende Bearbeitungswerkzeuge (2) zur Aufnahme in eine standardisierte, hinsichtlich Form und Rundlaufgenauigkeit präzise gefertigte zylindrische Aufnahmeöffnung (3) in den Arbeitsspindeln (4) von sog. Transferstraßen oder von beispielsweise Steilkegeladaptern. In dem als Adapter zwischen Werkzeugschaft und standardisierter Aufnahmeöffnung dienenden Standardschaft (1) ist seinerseits das Bearbeitungswerkzeug mittels einer zylindrischen Preßverbindung dauerhaft fixiert, wobei für eine höchstmögliche Rundlaufgenauigkeit der Arbeitsflächen des Bearbeitungswerkzeuges (2) gegenüber dem Standardschaft (1) gesorgt ist. Erfindungsgemäß soll der Werkzeugschaft (12) unter Beibehaltung der bisherigen Vorteile - hohe Spannkraft und Rundlaufgenauigkeit und geringer Bauraum - nun auch noch lösbar in dem Standardschaft (1) fixierbar sein. Zu diesem Zweck weist der Standardschaft (1) vorne eine innen und außen genau bearbeitete, längsgeschlitzte Klemmhülse (15) auf. Die Klemmhülse (15) wird durch eine etwa gleich lange und in der Wanddicke mindestens gleichstarke, genau bearbeitete Schrumpfmanschette (18) aus einer Formgedächtnislegierung gespannt, die bei Raumtemperatur im austenitischen Gefügezustand vorliegt und dabei aufgrund geeigneter Vorbehandlung im Durchmesser reduziert ist und stramm am Umfang der Klemmhülse. Durch Unterkühlen kann die Schrumpfmanschette (18) in den martensitischen Gefügezustand überführt und dadurch im Durchmesser aufgeweitet werden, wodurch die Klemmhülse (15) entlastet wird und das vom Standardschaft (1) aufgenommene Bearbeitungswerkzeug (2) ausgetauscht werden kann.

## Beschreibung

Die Erfindung betrifft einen zylindrischen Standardschaft für rotierende Bearbeitungswerkzeuge nach dem Oberbegriff von Anspruch 1, wie er in der industriellen Großserienfertigung spanender Formgebung mit Transferstraßen bekannt ist.

Bei derartigen Anwendungsfällen werden vorteilhafterweise die vielen zu bestückenden Arbeitsspindeln mit einheitlichen Aufnahmeöffnungen zur unmittelbaren Aufnahme der Bearbeitungswerkzeuge versehen, um teure Spannfutter und eine Einbuße an Spanngenauigkeit und Rundlauffehler zu vermeiden. Eine hohe Rundlaufgenauigkeit ist wichtig, um lange Standzeiten der Bearbeitungswerkzeuge erreichen zu können. Damit jedoch die in der Größe recht unterschiedlichen Bearbeitungswerkzeuge in den standardisierten Aufnahmeöffnungen einsetzbar sind, muß an den Werkzeugschaft eines jeden Bearbeitungswerkzeuges jeweils ein als Adapter dienender Standardschaft angebracht werden, wobei die gegenseitige Verbindung selbstverständlich mit größtmöglicher Rundlaufgenauigkeit, hoher Spannkraft und bei geringem Bauvolumen realisiert werden muß.

Bei herkömmlichen Standardschäften muß das Bearbeitungswerkzeug
- in die Aufnahmebohrung des Standardschaftes eingelötet oder eingeklebt werden; weder die Löt- noch die Klebeverbindung sind in der Weise wieder lösbar, daß der Standardschaft wiederverwendbar wäre, oder
- durch einen sehr strammen Preßsitz in die auf Untermaß gefertigte Aufnahmebohrung des Standardschaftes eingepreßt oder die Aufnahmebohrung des Standardschaftes durch Erwärmen und anschließendes Abkühlen auf den Schaft des Bearbeitungswerkzeuges aufgeschrumpft werden, so daß das Bearbeitungswerkzeug aus dem Standartschaft nicht mehr zerstörungsfrei entfernt werden kann.

Zwar sind die eben erwähnten Aufnahmetechniken eines Bearbeitungswerkzeuges sehr platzsparend und ausreichend rundlaufgenau, wenn die Bearbeitungsflächen des Bearbeitungswerkzeuges erst nach dessen Einsetzen und Fixieren in den Standardschaft und bei Aufnahme des Gesamtwerkzeuges an dem Fügezylinder des Standardschaftes in der Werkzeugschleifmaschine geschliffen werden. In allen diesen Fällen muß jedoch nach vollständigem Verschleiß oder Bruch des Bearbeitungswerkzeuges auch der Standardschaft verschrottet werden. Im übrigen ist das Einlöten nur bei bestimmten Werkzeugwerkstoffen, nämlich Hartmetallen. und auch bei diesen nur unter Inkaufnahme bestimmter Gefügebeeinträchtigungen realisierbar.

Eine zwar denkbare Klemmung der Bearbeitungswerkzeuge in dem Standardschaft mittels Spannzange wäre nicht praxistauglich, weil eine solche Klemmung
- nur eine zu geringe Rundlaufgenauigkeit reproduzieren läßt,
- eine nicht ausreichende Fixierung des Bearbeitungswerkzeug im Standardschaft erbringt sowie
- bei ausreichender Stabilität nur mit einem großen Bauvolumen insbesondere in radialer Hinsicht realisierbar wäre.

Die gleichen Gründe gelten im Prinzip auch für das Klemmen der Bearbeitungswerkzeuge in einem Standardschaft mittels einer hydraulisch beaufschlagbaren Metallmanschette (vgl. z.B. DE-OS 39 09 630 oder DE-PS 26 39 320), wobei hier die Nachteile eines großen Bauvolumens und einer in Grenzen schwimmenden Halterung des Bearbeitungswerkzeuges besonders durchschlagen; ferner ist hier ein über die gesamte Lebensdauer des Bearbeitungswerkzeuges hinweg gleichbleibend hohes Aufrechterhalten des hydraulischen Spanndruckes sehr problematisch und für die Praxis nicht überzeugend gelöst.

Denkbar wäre auch, das Einspannen des Bearbeitungswerkzeuges in den Standardschaft mittels einer sog. "Whistle Notch"-Verbindung (whistle notch = Flötenkerbe) zu bewerkstelligen, wie sie auch für die Einspannung des Standardschaftes in die Arbeitsspindel der Werkzeugmaschine vorgesehen ist. Eine solche "Flötenkerbe" ist durch eine Schrägfläche am Schaftumfang gebildet, die um etwa 2°, nach innen gerichtet, schräggestellt ist und auf die eine orthogonal dazu in der Wandung der Arbeitsspindel angeordnete Wurmschraube einwirkt. Diese Verbindungstechnik ist jedoch nur für größere Schaftdurchmesser tauglich; im übrigen stellt sie für die spindelseitige Einspannung einen unvermeidbaren Kompromiß zwischen den Forderungen nach hoher Rundlaufgenauigkeit - hier gerade noch vertretbar - einerseits und rascher sowie einfacher Lösbarkeit der Einspannung mit üblichen Werkstattmitteln - hier gegeben - andererseits dar. Eine nochmalige Anwendung einer "Whistle Notch"-Verbindung in derselben Werkzeugeinspannung würde die unvermeidbaren Rundlauffehler unzulässig stark kummulieren lassen; außerdem soll die Verbindung zwischen Bearbeitungswerkzeug und Standardschaft nicht mit einfachen Werkstattmitteln lösbar sein. Aus diesen Gründen kommt eine Anwendung von sog. "Whistle Notch"-Verbindungen zwischen Bearbeitungswerkzeug und Standardschaft nicht in Betracht.

Aufgabe der Erfindung ist es, den gattungsgemäß zugrundegelegten Standardschaft dahingehend zu verbessern, daß er das zu spannende Bearbeitungswerkzeug zwar ohne weiteres lösbar aufnehmen kann und dadurch der Standardschaft ohne weiteres mehrfach wiederverwendbar ist, daß aber gleichwohl bei kleinem Bauvolumen der Spanneinrichtung das Bearbeitungswerkzeug mit hoher Haltekraft und bei hoher, reproduzierbarer Rundlaufgenauigkeit festgehalten wird. Außerdem soll durch die Art der neuen Werkzeugspannung die Werkzeugstandzeit keinesfalls beeinträchtigt, sondern nach Möglichkeit günstig beeinflußt werden.

Diese Aufgabe wird erfindungsgemäß durch die kennzeichnenden Merkmale von Anspruch 1 gelöst. Danach wird die Lösbarkeit des Bearbeitungswerkzeuges aus dem Standardschaft durch die Anwendung des an sich bekannten, aber bei üblicher Ausbildung für die vorliegende Werkzeugspannung aus mehreren Gründen unzureichenden Spannzangenprinzips geschaffen. Die vorliegend dennoch damit erzielbare hohe Spannkraft und die reproduzierbar hohe Spanngenauigkeit bei geringem radialen Bauvolumen resultieren überraschender Weise aus der Verwendung einer Schrumpfmanschette aus Formgedächtnislegierung. Aufgrund des hohen, gleichmäßig über die gesamte Leibungsfläche der Klemmhülse wirksamen Klemmdruckes kann die Genauigkeit der Leibungsfläche voll bei der Werkzeugspannung wirksam werden. Bei der durch Erwärmen bewirkten Umwandlung des Werkstoffgefüges der Schrumpfmanschette von martensitisch - unterkühlt - in austenitisch - raumwarm - schrumpft die Schrumpfmanschette aufgrund des Formerinnerungsvermögens der Legierung im Durchmesser zusammen, wobei sie sich mit hoher Kraft außenseitig an die Klemmhülse anlegt. Durch die hohe Rundlaufgenauigkeit sind Restunwuchten und somit die Anregung zu Unwuchtschwingungen des Werkzeuges sehr gering, was sich günstig auf die Bearbeitungsgenauigkeit und die Werkzeugstandzeit auswirkt. Die erfindungsgemäße Werkzeugspannung hat sich überdies als erstaunlich schwingungsdämpfend erwiesen, was ebenfalls die Bearbeitungsgenauigkeit und die Werkzeugstandzeit verbessert. Die schwingungsdämpfende Wirkung kommt zum einen durch die die beiden konzentrischen, zylindrischen Paßflächenpaare aufgrund einer Einspannhysterese und zum anderen aufgrund der guten Dämpfungseigenschaft des Formgedächtniswerkstoffes der Schrumpfmanschette selber zustande.

Bei einer breiten Anwendung der Erfindung in der spangebenden Großserienfertigung eines großen Betriebes ergibt sich eine ganze Reihe von Vorteilen:
- Der Standardschaft ist bei Bruch oder nach voller Ausnutzung der Nachschleifreserve des darin aufgenommenen Bearbeitungswerkzeuges ohne weiteres wiederverwendbar;
- wegen des für sich im Vergleich zum Einzelpreis des Bearbeitungswerkzeuges etwa doppelt so teuren Standardschaftes und wegen dessen Wiederverwendbarkeit ist bei einer großen Anzahl von Standardschäften in einer Großserienfertigung ein großes Einsparpotential gegeben;
- trotz Lösbarkeit des Bearbeitungswerkzeuges kann es bei reproduzierbar hoher Rundlaufgenauigkeit und hoher Haltekraft in den Standardschaft eingespannt bzw. darin festgehalten werden;
- da die Werkzeugspannung bei - niedrigen - Temperaturen erfolgt, bei der das Werkstoffgefüge aller üblichen Schneidwerkzeug-Werkstoffe völlig unverändert bleibt und auch keine hohen Temperaturdehnungen durchlaufen werden, können mit dem erfindungsgemäßen Standartschaft Werkzeuge aus allen denkbaren Werkstoffen, insbesondere auch aus dem relativ preiswerten Hochschnellschnittstahl oder aus den besonders verschleißbeständigen Schneidkeramiken gespannt werden;
- der Standardschaft ermöglicht im Vergleich mit herkömmlichen Wechselspannwerkzeugen
   - eine unerreicht hohe Haltekraft,
   - eine unerreicht hohe Rundlaufgenauigkeit (< 15 µm), die auch nach wiederholten Spannungen reproduzierbar ist und
   - ein unerreicht geringes Bauvolumen insbesondere in radialer Hinsicht, was für eine Bearbeitung in beengten Umgebungsverhältnissen eines Werkstückes besonders wichtig ist;
- hohe Dämpfungswirkung der aus Formgedächtnislegierung bestehenden Schrumpfmanschette gegen Radialschwingungen;
- unabhängig davon ferner Dämpfungswirkung durch zwei konzentrisch ineinander liegende Fügeflächenpaare aufgrund einer Einspannhysterese;
- aufgrund der hohen Dämpfungswirkung der Werkzeugspannung gegen Radialschwingungen des Werkzeuges sind mit dieser höhere Werkzeugstandzeiten als mit bekannten, weniger gut dämpfenden Werkzeugspannungen erreichbar;
- die Klemmverbindung zwischen Bearbeitungswerkzeug und Standardschaft ist zwar relativ einfach lösbar (Unterkühlen durch Einlegen in Trockenschnee [CO₂] oder Eintauchen in flüssigen Stickstoff), sie kann jedoch vom Maschinenführer einer Transferstraße mit den dort vor Ort üblichen Werkstattmittel nicht, auch nicht versehentlich gelöst werden, so daß eine langzeitsichere Werkzeugeinspannung gegeben ist;
- es können standardisierte und somit billigere und kurzfristig nachlieferbare Bearbeitungswerkzeuge in bereits fertig geschliffenem Zustand vom Kunden bzw. Anwender der Werkzeuge in den Standardschaft aufgenommen und fixiert werden, so daß eine kostspielige und langfristig disponierte Vorratshaltung von teuren Sonderwerkzeugen beim Anwender entfallen kann;
- der Standardschaft erlaubt - wenn er hohlgebohrt ist - ohne gesonderte Abdichtung ein sicheres und verlustfreies Leiten von Kühl- und Schmieremulsion durch die Klemmung des Bearbeitungswerkzeug hindurch.

Zwar sind beispielsweise aus der DE-OS 30 07 307 reversibel lösbare Schrumpfverbindungen unter Verwendung von Schrumpfmanschetten aus Formgedächtnislegierung bekannt, jedoch handelt es sich dabei um die Verbindung von stumpf aneinander stoßenden, zylindrischen Teilen, insbesondere von Rohren, die durch eine unmittelbar auf den beiden Rohrenden aufliegende, den Stoß überbrückende Schrumpfmanschette verbunden werden. Angesichts der hohen Genauigkeitsforderungen für Werkzeugeinspannungen war es für den auf diesem Gebiet tätigen Fachmann nicht vorhersehbar, daß die auf dem Gebiet des Stahlbaues bekannte Schrumpfverbindung bei einer Anwendung auf eine Spannzange, die für die vorliegende Anwendung nicht die erforderliche Spanngenauigkeit erbringt, trotzdem hier hinsichtlich aller zu erfüllender Erfordernisse voll befriedigt. Die Übertragung auf ein völlig anderes Sachgebiet bei einer modifizierten und unter der gestellten Aufgabe als abwegig anzusehenden Anwendung der Schrumpfmanschetten aus Formgedächtnislegierung muß als originell, fachunüblich und überdurchschnittlich angesehen werden.

Zweckmäßige Ausgestaltungen der Erfindung können den Unteransprüchen entnommen werden. Durch die Längenbeschränkung der Längsschlitze der Klemmhülse nach Anspruch 6 soll die Klemmung des Werkzeugschaftes gegen Verlust bzw. vorzeitigen Austritt von Kühl- und Schmieremulsion wirkungsvoll abgedichtet werden.

Die Erfindung ist an Hand eines in der Zeichnung dargestellten Ausführungsbeispieles nachfolgend noch erläutert. Dabei zeigen:
- Fig. 1: einen Längsschnitt durch das vordere Ende der Arbeitsspindel einer Werkzeugmaschine mit einem darin aufgenommenen Standardschaft einschließlich Bearbeitungswerkzeug,
- Fig. 2: eine vergrößerte Einzeldarstellung der Einzelheit II aus Figur 1,
- Fig. 3: eine perspektivische Darstellung von Standardschaft alleine und gleichachsig aufsteckbereit dazu gezeigter Schrumpfmanschette,
- Fig. 4: ein modifiziertes Ausführungsbeispiel des Standardschaftes zur lösbaren Aufnahme eines Bearbeitungswerkzeuges mit Mittelbohrung an einem Spanndorn mit Verdrängungsstopfen,
- Fig. 5: ein weiteres Ausführungsbeispiel eines Standartschaftes mit längsgeschlitzter, aber stabilisierter Klemmhülse und
- Fig. 6: ein weiteres Ausführungsbeispiel mit längsgenuteter Klemmhülse.

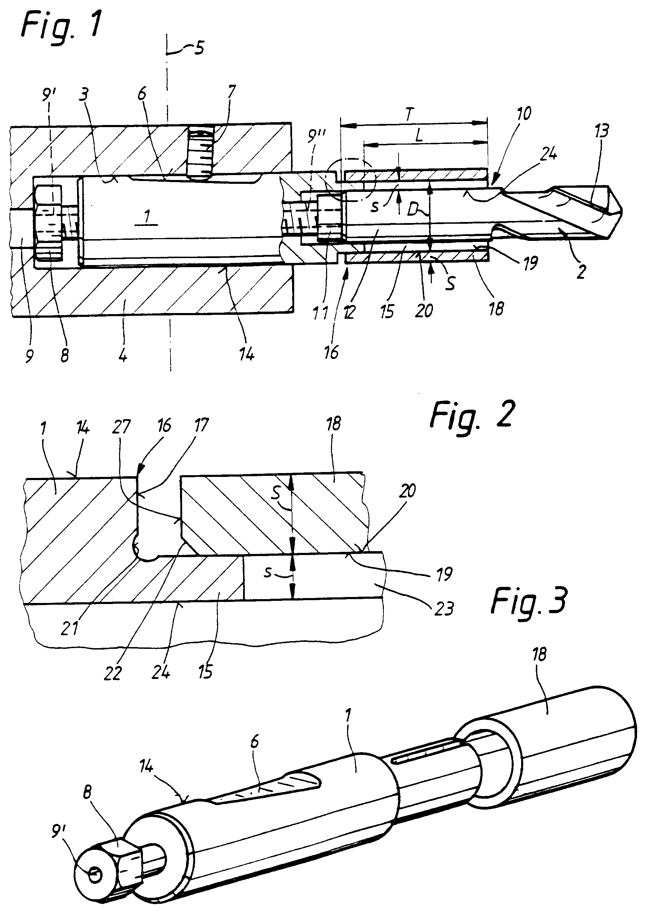

In Figur 1 ist das werkzeugseitige Ende einer Arbeitsspindel 4 einer nur angedeuteten Werkzeugmaschine 5 insbesondere der spangebenden Großserienfertigung dargestellt, z.B. einer Transferstraße. Die Arbeitsspindel weist an ihrem vordere Ende eine hinsichtlich Form und Rundlaufgenauigkeit präzise gefertigte, für alle Arbeitsspindeln gleicher Größe einer Transferstraße gleiche, also standardisierte Aufnahmeöffnung 3 auf. Die je nach zugedachter Arbeitsoperation unterschiedlichen Bearbeitungswerkzeuge sollen in der Arbeitsspindel unmittelbar, d.h. ohne Zwischenfügung eines veränderbaren Spannfutters aufgenommen werden. Deshalb müssen die Bearbeitungswerkzeuge alle einen an die standardisierte Aufnahmeöffnung 3 angepaßten, als Adapter dienenden, zylindrischen Standardschaft 1 tragen, der mit dem jeweiligen Bearbeitungswerkzeug mittels einer zylindrischen Preßverbindung 10 dauerhaft fixiert ist. An den Außenumfang des Standardschaftes 1 ist ein präziser, nur ein geringes Untermaß (beispielsweise etwa 1 bis 4 µm) gegenüber der zylindrischen Aufnahmeöffnung 3 in der Arbeitsspindel 4 aufweisender Fügezylinder 14 angeschliffen. Aus gründen der Arbeitsgenauigkeit und aus Standzeitgründen muß für eine höchstmögliche Rundlaufgenauigkeit der Arbeitsflächen 13 des Bearbeitungswerkzeuges 2 gegenüber dem Fügezylinder 14 des Standardschaftes 1 gesorgt werden. Eine hohe Rundlaufgenauigkeit ist auch zur Vermeidung von Unwuchten wichtig, widrigenfalls solche bei den häufig sehr hohen Spindeldrehzahlen zu einer dynamischen Radialverformung des Werkzeugs und letztere wiederum zu - zusätzlicher - Arbeitsungenauigkeit und Standzeitverlust führen würde. Zur Bildung der zylindrischen Preßverbindung 10 zwischen Standardschaft 1 und Bearbeitungswerkzeug 2 ist standardschaftseitig eine monolitisch mit dem Standardschaft 1 verbundene, radial nachgiebige Klemmhülse 15 vorgesehen, die innenseitig mit einer Aufnahmebohrung 20 definierten Durchmessers versehen ist. Zum radialen Spannen der Klemmhülse 15 ist sie von einer Schrumpfmanschette 18 aus Formgedächtnislegierung umgeben, die durch Temperaturänderung im Werkstoffgefüge und somit geringfügig in den Abmessungen reversibel verändert werden kann und mit der demgemäß hohe Radialkräfte reversibel ausgeübt werden können. Werkzeugseitig ist ein zylindrischer Werkzeugschaft 12 vorgesehen.

Beim dargestellten Ausführungsbeispiel erfolgt das Einspannen des Standardschaftes in die Aufnameöffnung 3 der Arbeitsspindel 4 mittels einer sog. "Whistle Notch"-Verbindung (whistle notch = Flötenkerbe). Eine solche "Flötenkerbe" ist durch eine Schrägfläche 6 am Schaftumfang gebildet, die um etwa 2°, nach innen gerichtet, schräggestellt ist und auf die eine orthogonal dazu in der Wandung der Arbeitsspindel 4 angeordnete Wurmschraube 7 einwirkt. Diese Verbindungstechnik hat sich für größere Schaftdurchmesser bewährt; allerdings stellt sie für die spindelseitige Einispannung des Standardschaftes einen unvermeidbaren Kompromiß zwischen den Forderungen nach hoher Rundlaufgenauigkeit - hier gerade noch vertretbar - einerseits und rascher sowie einfacher Lösbarkeit der Einspannung mit üblichen Werkstattmitteln - hier gegeben - andererseits dar.

An dem vom Bearbeitungswerkzeug abgewandten, in den Grund der Aufnahmeöffnung 3 der Arbeitsspindel 4 weisenden Stirnende des Standardschaftes 1 ist eine nur schwergängig im Standardschaft verschraubbare Einstellschraube 8 zum Justieren der Einstecktiefe des Standardschaftes 1 in die Aufnahmeöffnung 3 angeordnet. In ähnlicher Weise ist auch am Grund der Aufnahmebohrung 24, auf die weiter unten noch näher eingegangen werden soll, eine ebenfalls nur schwergängig im Standardschaft verschraubbare Einstellschraube 11 vorgesehen, mit der die Einstecktiefe T des Bearbeitungswerkzeuges 2 in die Aufnahmebohrung 24 - unabhängig von der zuvor erwähnten Tiefeneinstellmöglichkeit - eingestellt werden kann. Beim dargestellten Ausführungsbeispiel sind die Einstellschrauben 8 und 11 zentrisch axial auf ihrer ganzen Länge zum Durchlaß von Kühl- und Schmieremulsion durchbohrt - Bohrungen 9' bzw. 9''. Auch die Arbeitsspindel 4 ist, ebenso wie der Standardschaft 1 und das Bearbeitungswerkzeug 2, mit zentrischen Bohrungen 9 versehen, so daß die Kühl- und Schmieremulsion bis in den Bereich der spanabhebenden Arbeitsflächen 13 des Bearbeitungswerkzeuges 2 geleitet werden kann. An dieser Stelle sei bereits bemerkt, daß in vorteilhafter Weise die Preßverbindung 10 zwischen Standardschaft 1 und Bearbeitungswerkzeug 2 ohne weiteres ausreichend dicht ist und besondere Vorkehrungen gegen - vorzeitigen - Austritt bzw. Verlust von Kühl- und Schmieremulsion nicht erforderlich sind. Es müssen dazu lediglich die Längsschlitze 23 in der Klemmhülse 15 in Einsteckrichtung des Bearbeitungswerkzeuges 2 kürzer - Länge L - ausgebildet werden, als die geringste Einstecktiefe T des Werkzeugschaftes 12 in die Aufnahmebohrung 24 des Standardschaftes 1.

Die erwähnte Preßverbindung 10 zwischen dem Standardschaft 1 und dem Bearbeitungswerkzeug 2 bzw. dem Werkzeugschaft 12 ist bei hoher Rundlaufgenauigkeit dadurch lösbar gestaltet, daß der Standardschaft 1 im vorderen axialen Bereich der Aufnahmebohrung 24 eine dünnwandige, längsgeschlitzte Klemmhülse 15 mit Längsschlitzen 23 aufweist, wobei die Klemmhülse 15 monolitisch mit dem sonstigen Werkstoff des Standardschaftes 1 verbunden ist. Die Klemmhülse ist innenseitig durch die Aufnahmebohrung 24 gebildet, die maßlich mit hoher Genauigkeit gefertigt ist und die mit ihrer Maßgenauigkeit im wesentlichen die Rundlaufgenauigkeit der Preßverbindung 10 bestimmt. Aber auch auf ihrer Außenfläche 20 ist die Klemmhülse 15 mit einem definierten Außendurchmesser D versehen. Auf die Klemmhülse 15 ist eine Schrumpfmanschette 18 aus einer Formgedächtnislegierung, z. B. aus einer Nickel/Titan-Legierung aufgeschoben, deren axiale Länge etwas geringer als die der Klemmhülse 15 ist. Zwar kann die Klemmhülse 15 eine relativ geringe Wandstärke s aufweisen, die jedoch aus Gründen einer Mindeststabilität nicht beliebig klein gestaltet werden sollte. Andererseits darf die Klemmhülse auch nicht zu dickwandig ausgebildet sein, da sie sonst in Radialrichtung zu steif werden würde und sich nicht durch die Schrumpfmanschette mit genügend hoher Kraft an den Schaft des Werkzeuges anpressen ließe. Zwar könnte im Falle einer recht dickwandigen Klemmhülse diese sich durch eine noch stärker dimensionierte Schrumpfmanschette zusammendrücken lassen, jedoch würde dadurch die gesamte Klemmverbindung baulich in Radialrichtung nicht nur unnötig groß werden, sondern die Schrumpfmanschette würde wegen des teuren Werkstoffes, aus dem sie besteht, auch recht teuer werden. Die Wandstärke S der Schrumpfmanschette 18 entspricht mindestens der Wandstärke s der Klemmhülse 15; vorzugsweise wird man die Wandstärke S des Schrumpfmanschette mindestens zu 15 % des Durchmesser des Werkzeugschaftes 12 wählen. Aus diesem Grunde geht die Klemmhülse 15 außenseitig über eine Schulter 16 in den sonstigen Außenumfang des Standardschaftes 1 über, wobei der Übergang von der achssenkrechten Fläche 17 zur Klemmhülse 15 zwecks Abmilderung einer Kerbwirkung sauber ausgerundet und mit einer entsprechenden Ausrundung 21 versehen ist.

Formgedächtnislegierungen sind an sich bekannte Legierungstypen, über die auch eine spezielle Literatur existiert, auf die hier verwiesen werden soll. Es sei an dieser Stelle lediglich erwähnt, daß die Formgedächtnislegierung für den vorliegenden Anwendungsfall derart ausgewählt ist, daß deren Austenit-Finish-Temperatur unterhalb der Arbeitstemperatur, vorzugsweise bei etwa 10°C liegt. Dadurch ist der austenitische Gefügezustand der Schrumpfmanschette bei Raum- bzw. Arbeitstemperatur gegeben, wogegen zum Überführen der Schrumpfmanschette in den martensitischen Gefügezustand eine künstliche Abkühlung oder Unterkühlung erfolgen muß.

Damit die Schrumpfmanschette 18 die ihr zugedachte Funktion bei der lösbaren Gestaltung der Preßverbindung 10 ausüben kann, muß die Schrumpfmanschette folgende Bearbeitungszustände durchlaufen, die die Schrumpfmanschette aufgrund der Formgedächtniseigenschaft des Werkstoffes "erinnern" kann. Dabei kann die Schrumpfmanschette 18 als einzelne Buchse oder auch als zusammenhängendes Rohr in der nachfolgend geschilderten Weise behandelt sein, wobei die Bearbeitung als längeres Rohr den Vorteil hat, das mehrere gleiche Schrumpfmanschetten gleichzeitig bearbeitet werden können. Aus dem solcherart vorbehandelten Rohr brauchen dann lediglich noch einzelne kürzere Schrumpfmanschetten auf der Drehbank abgestochen oder in sonstiger Weise abgelängt zu werden.

Ausgehend von einem austenitischen Gefügezustand des Werkstoffes der Schrumpfmanschette 18 bzw. eines entsprechenden Rohres muß die der Klemmhülse 15 zugewandte Innenfläche 19 der Schrumpfmanschette auf ein deutliches Untermaß gegenüber dem Außendurchmesser D der Klemmhülse 15 bearbeitet werden, so daß sich bei der Paarung der Schrumpfmanschette 18 mit der Außenfläche 20 der Klemmhülse 15 rechnerisch eine hohe Vorspannung darauf ergibt. Dieses Bearbeiten im austenitischen Gefügezustand kann spanabhebend oder auch durch Massivumformung, bspw. durch Ziehen durch eine Ringdüse hindurch oder durch freies Streckziehen erfolgen.

Die anschließende Bearbeitung muß im martensitischen Gefügezustand durchgeführt werden, die durch Unterkühlen herbeigeführt werden kann und - sofern nicht eine Formgedächtnislegierung mit sog. aufgeweiteter Hysrerese verwendet wird - durch ständiges Kühlhalten aufrechterhalten werden muß. Die Bearbeitung im martensitischen Gefügezustand darf nur durch Massivumformung erfolgen. Und zwar wird die Schrumpfmanschette zweckmäßigerweise bei unbehinderter Axialkontraktion soweit in Umfangsrichtung gedehnt, daß in entlastetem Zustand der Durchmesser der Innenfläche 19 der Schrumpfmanschette 18 bzw. eines entsprechenden Rohres ein geringes Übermaß gegenüber der Klemmhülse 15 bzw. ihrer Außenfläche 20 aufweist und die Schrumpfmanschette 1 auf der Klemmhülse 15 ohne großen Kraftaufwand verschiebbar ist.

Die im martensitischen Gefügezustand vorzunehmende Massivumformung der Schrumpfmanschette kann bei sorgfältiger Vorgehensweise auch folgendermaßen durchgeführt werden: Zunächst wird ein Werkzeugschaft 12 in die Aufnahmebohrung 24 einer Klemmhülse 15 ohne Schrumpfmanschette eingesteckt. Anschließend wird die Schrumpfmanschette 15 in martensitischem Zustand vorsichtig in einer Preßeinrichtung auf die Außenfläche 20 der Klemmhülse axial aufgeschoben, wobei die Schrumpfmanschette plastisch im Durchmesser aufgeweitet wird. Anschließend muß die Schrumpfmanschette durch geignete gemeinsame Temperaturbehandlung von Schrumpfmanschette, Werkzeug und Standartschaft noch in den austenitischen Gefügezustand überführt werden. Bei Formgedächtnislegierung mit aufgeweiteter Hysterese muß die genannte Baueinheit dazu also einmal bis über die Austenit-Finish-Temperatur erwärmt werden und kann dann auf die Arbeitstemperatur, meist die Raumtemperatur, abkühlen. Bei der eben kurz geschilderten vereinfachten, zweiten Bearbeitungsstufe der Schrumpfmanschette wird diese gewissermaßen durch ihren erstmaligen Gebrauch in noch "jungfräulichem" Zustand massivumformend zuendebearbeitet.

Um die länger andauernde Bearbeitung der martensitischen Schrumpfmanschette nicht bei niedrigen Temperaturen unterhalb des Gefrierpunktes durchführen zu müssen, ist es - wie gesagt - zweckmäßig, für die Schrumpfmanschetten eine Formgedächtnislegierung mit sog. aufgeweiteter Hystere zu verwenden, bei der die Martensit-Start- und die Austenit-Start-Temperatur um wenigstens 50 bis 80 Grad der Kelvinskala auseinanderliegen. Bei einer solchen Legierung kann bei geigneter Lage der Umwandlungsbereiche innerhalb des Temperaturspektrums und bei geeigneter Vorbehandlung der Schrumpfmanschette auch bei Raumtemperatur noch martensitisches Gefüge vorliegen, obwohl bei Abkühlung die Umwandlung in den martensitischen Gefügezustand erst bei wesentlich niedrigeren Temperaturen erfolgen mag. Aufgrund dessen kann die bei diesem Gefügezustand erforderliche Bearbeitung in vorteilhafter Weise bei Raumtemperatur vorgenommen werden.

Um mittels einer solcherart präparierten Schrumpfmanschette 18 einen Werkzeugschaft 12 an der Preßverbindung 10 mit dem Standardschaft 1 verbinden zu können, wird der Werkzeugschaft 12 in die Aufnahmebohrung 24 auf die gewünschte Tiefe T eingesteckt und anschließend die in martensitischem Gefügezustand vorliegende Schrumpfmanschette 18 auf die Klemmhülse 15 aufgeschoben, wobei während des Aufschiebens gegebenenfalls darauf zu achten ist, daß der martensitische Gefügezustand zunächst noch erhalten bleibt, d.h. nicht durch Erwärmung an der Umgebungsluft und/oder an dem Standartschaft selbsttätig eine auch nur teilweise Gefügeumwandlung in den austenitischen Zustand eintritt. Beim Aufschieben der Schrumpfmanschette 18 auf die Klemmhülse 15 sollte, sofern die Schrumpfmanschette im aufgeschobenen Zustand sonst keine Ansatzflächen für eine Abzugsvorrichtung bietet, darauf geachtet werden, daß zwischen der achssenkrechten Fläche 17 der Schulter 16 und der gegenüberliegenden Stirnseite 27 der Schrumpfmanschette 18 ein in axialer Richtung ausreichend großer Spalt zum Ansetzen der Krallen einer Abzugsvorrichtung verbleibt. Um die Preßverbindung herzustellen, muß die Schrumpfmanschette in den austenitischen Gefügezustand umgewandelt werden, was durch Erwärmen auf Raumtemperatur geschieht. Hierbei kann die Schrumpfmanschette vom freien Ende her, also vom Bearbeitungswerkzeug 2 her erwärmt werden, so daß die Gefügeumwandlung von martensitisch in austenitisch vom freien Ende her axial durch die Schrumpfmanschette hindurch fortschreitet und die Preßverbindung 10 sich vom freien Ende der Schrumpfmanschette her zu schließen beginnt; es kommt also zu einem peristaltischen Aufschrumpfen der Schrumpfmanschette vom freien Ende her in Richtung auf die Schulter 16 hin. Durch das Aufschrumpfen der Manschette 18 auf die Klemmhülse 15 kommt es zu einem sehr strammen Festklemmen des Werkzeugschaftes 12 in der Klemmhülse 15, wodurch ein stabiler tragfähiger Verbund zwischen Standardschaft 1, Klemmhülse 15 und Schrumpfmanschette 18 zustande kommt. Dank der erfindungsgemäßen Ausgestaltung der Preßverbindung 10 kann der Werkzeugschaft trotz der geringen baulichen Abmessungen der Preßverbindung insbesondere in radialer Hinsicht bei hoher Klemmkraft und hoher Rundlaufgenauigkeit festgehalten werden.

Um die Preßverbindung 10 wieder lösen zu können, braucht der Standardschaft 1 mit dem darin aufgenommenen Bearbeitungswerkzeug 2 lediglich in Trockenschnee - Kohlendioxid - oder in flüssige Luft bzw. flüssigen Stickstoff gelegt zu werden. Durch die solcherart herbeiführbare Unterkühlung des Werkzeuges wird der Werkstoff der Schrumpfmanschette 18 in den martensitischen Gefügezustand überführt, wodurch die Schrumpfmanschette, zumindest wenn sie "trainiert" ist, was jedoch durch einem mehrmaligen Werkzeugwechsel selbsttätig erfolgt, sich in den in diesem Gefügezustand herbeigeführten Maßzustand mit einem größeren Durchmesser zurückerinnert, d. h. die Schrumpfmanschette wächst im Durchmesser auf und gibt die Preßverbindung frei. Dadurch kann der Werkzeugschaft 12 ohne großen Kraftaufwand aus der Klemmhülse 15 bzw. der Aufnahmebohrung 24 herausgezogen werden. Solange die Schrumpfmanschette noch nicht "trainiert" ist, kommt es aufgrund des geringeren Elastizitätsmoduls und der geringeren Streckgrenze des - nun martensitischen - Manschettenwerkstoffes sowie aufgrund der radial nach außen gerichteten, entlastend wirkenden Kräfte der Klemmhülse 15 zu einer ganz deutlichen Entlastung der Klemmung, so daß der Werkzeugschaft in jedem Fall aus dem Standartschaft beschädigungsfrei entnommen werden kann. Mit zunehmender Anzahl von Werkzeugwechseln wird die Schrumpfmanschette mehr und mehr "trainiert" und es wird der Entlastungseffekt nach Umwandlung der Schrumpfmanschette in den martensitischen Zustand immer besser. Auf diese Weise ist ein Werkzeugwechsel in dem Standardschaft 1 leicht und rasch durchführbar, wenn auch nur in einer besonderen Werkstatt, wo die entsprechenden Unterkühlungsmittel vorhanden sind. Abgesehen von dem Fall einer noch "untrainierten" Schrumpfmanschette kann eine gewisse axiale Schwergängigkeit der radial aufgeweiteten Schrumpfmanschette auf der Klemmhülse auch dadurch entstehen, daß die Schrumpfmanschette auf der Klemmhülse durch angetrocknetes und/oder verharztes Kühlmittel festgeklebt ist oder dadurch, daß die Oberflächen beider Teile örtlich durch molekulare Adhäsion aneinander haften. Um trotz einer solchen Schwergängigkeit die in den aufgeweiteten Zustand überführte Schrumpfmanschette von der Klemmhülse axial abziehen zu können, wird die Schrumpfmanschette durch eine an sie angesetzte Abzugsvorrichtung abgezogen, wofür der weiter oben erwähnte Umfangsspalt zwischen achssenkrechter Fläche 17 und Manschetten-Stirnseite 27 belassen worden war. Vor Ort an der Werkzeugmaschine ist in jedem Fall mit den dort üblichen Werkstattmitteln ein Austausch der Bearbeitungswerkzeuge innerhalb eines Standardschaftes nicht, auch nicht versehentlich möglich, was durchaus beabsichtigt ist. Trotz der Möglichkeit des gewaltfreien Lösens der Preßverbindung 10 sitzt diese bei Raumtemperatur jedoch dauerhaft fest.

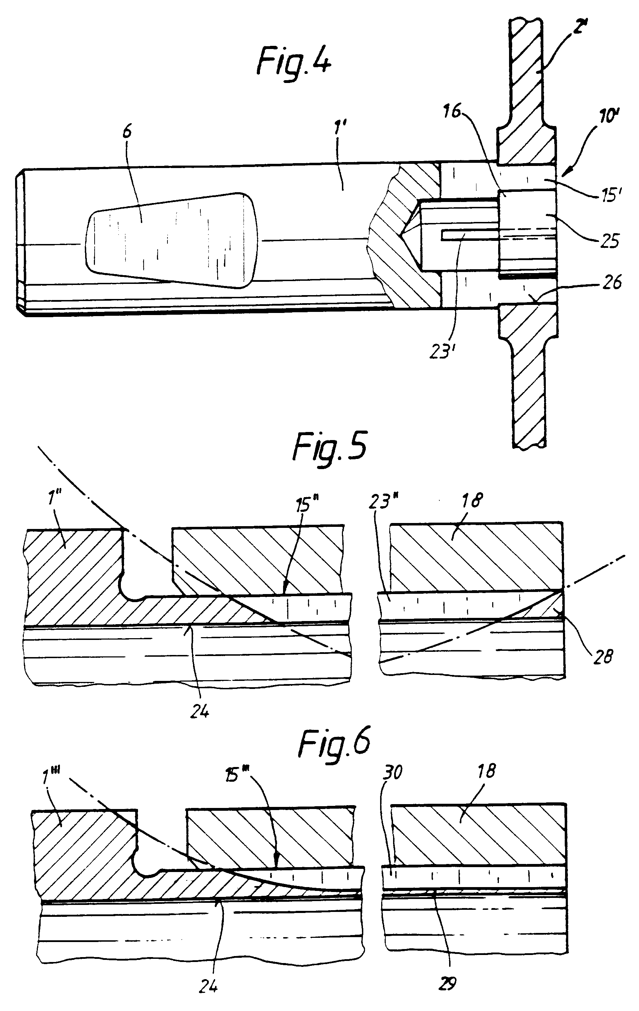

Das Prinzip der lösbaren Klemmverbindung 10 ist auch gewissermaßen umkehrbar, wie dies in Figur 4 angedeutet ist. Der dortige Standardschaft 1' dient zur Aufnahme eines scheibenförmigen Bearbeitungswerkzeuges 2' mit einer zentrischen Bohrung 26, die über eine Preßverbindung 10' rundlaufgenau und bei hoher Haltekraft mit dem Standardschaft 1' verbunden werden soll. Zu diesem Zweck ist an dem Standardschaft ebenfalls eine Klemmhülse 15' angebracht, die das Bearbeitungswerkzeug 2' unmittelbar auf ihrer Außenseite nach Art eines Spanndornes aufnimmt. In das Innere des solcherart gebildeten Spanndornes ist ein Verdrängungstopfen 25 aus Formgedächtnislegierung eingesteckt, der axial an einer Schulter 16' anliegt. In austenitischem Gefügezustand weist der Verdrängungstopfen 25 ein deutliches Übermaß gegenüber der Bohrung innerhalb der Klemmhülse 15' auf, wogegen aufgrund einer entsprechenden Vorbehandlung der Verdrängungsstopfen 25 in martensitischem Gefügezustand in der Öffnung innerhalb der Klemmhülse 15' verschiebbar ist. Es soll hier lediglich angedeutet werden, daß das gleiche Spannprinzip, wenn auch baulich gegenüber dem Ausführungsbeispiel nach Figur 1 umgekehrt, bei Bearbeitungswerkzeugen 2' mit zentrischer Bohrung 26 angewendet werden kann.

Grundsätzlich ist es denkbar, die Klemmhülse auch ganz ohne Längsschlitze auszubilden, und zwar dann, wenn die Aufnahmebohrung 24 darin besonders spielarm mit dem Werkzeugschaft 12 zusammengepaßt, die Klemmhülse besonders dünnwandig und die Schrumpfmanschette 18 vergleichsweise sehr kräftig gestaltet ist. Eine solche Ausgestaltung würde der Forderung nach hoher Spanngenauigkeit in mehrerlei Hinsicht entgegenkommen, und zwar zum einen durch das spielarme Zusammenpassen der Aufnahmebohrung mit dem Werkzeugschaft, zum weiteren durch die entsprechend geringeren Klemmwege und schließlich durch die höhere Eigensteifigkeit der ungeschlitzten Klemmhülse. Allerdings wird eine ungeschlitzte Klemmhülse bis an die Grenzen ihrer Elastizität beansprucht und es besteht die Gefahr, daß eine solche Klemmhülse Risse bekommt. Durch das Anbringen von Längsschlitzen 23, 23'' oder von Längsnuten 30 wird die Radialelastizität der Klemmhülse 15, 15'' bzw. 15''' ganz erheblich gesteigert, aber durchgehende Längsschlitze 15 beeinträchtigen zugleich die Biegesteifigkeit der Klemmhülse, was sich ungünstig auf die Spanngenauigkeit der ganzen Einrichtung auswirken kann. In den Figuren 5 und 6 sind Möglichkeiten angedeutet, wie die Klemmhülse 15'' bzw. 15''' trotz ihrer Schlitzung biegesteifer gestaltet werden kann.

Bei dem in Figur 5 dargestellten Ausführungsbeispiel sind die an der Klemmhülse 23'' des Standartschaftes 1'' angebrachten Längsschlitze 23'' nicht bis zum freien Ende der Klemmhülse durchgefräst, sondern es ist beim Fräsen mit einem Scheibenfräser am freien Ende der Klemmhülse 15'' ein zwickelförmiger oder dreieckiger Reststeg 28 stehengelassen, der in Bezug auf die Biegesteifigkeit der Klemmhülse 15'' sehr stabilisierend auf die beiden in Umfangsrichtung an den Längsschlitz 23'' angrenzenden zylindrischen Schalen der Klemmhülse 15'' wirkt; die Klemmhülse 15'' nach Figur 5 ist also wesentlich biegesteifer als die durchgehend längsgeschlitzte Klemmhülse 15 nach Figur 1. Außerdem verhindert der Reststeg 28 ein Eindringen von Schmutz oder Fremdkörpern in den Längsschlitz 23'' und in den Bereich des Kontaktflächenpaares zwischen Werkzeugschaft und Aufnahmebohrung zum einen und zwischen Klemmhülse und Schrumpfmanschette zum anderen. Zwar ist die Klemmhülse 15'' nach Figur 5 in ihrem freien Endbereich gewissermaßen als in Umfangsrichtung geschlossener Ring ausgebildet und unterliegt in diesem Bereich beim Aufschrumpfen der Schrumpfmanschette 18 der Gefahr von Anrissen. Dies wäre jedoch nicht weiter tragisch, weil die Risse auf einen engen Bereich lokalisiert blieben und daher im Endeffekt unschädlich bleiben würden; außerdem würde die stabilisierende Wirkung der Reststege trotz etwaiger Risse zumindest bei fest aufgeschrumpfter Schrumpfmanschette erhalten bleiben.

Bei dem in Figur 6 gezeigten Ausführungsbeispiel eines Standartschaftes 1''' ist die Klemmhülse 15''' mit Längsnuten 30 versehen, die im Bereich des Nutgrundes in der Wandung der Klemmhülse 15''' einen Nutgrundsteg 29 belassen, der ebenfalls stabilisierend auf die in Umfangsrichtung an eine Längsnut angrenzenden Wandungspartien der Klemmhülse 15''' wirken. Eine solche Klemmhülse wäre sehr stabil und infolgedessen auch sehr spanngenau. Wenn die Längsnuten 30 in ausreichender Anzahl und in ausreichender Breite angebracht werden, so kann sich gleichwohl ohne allzugroße Gefahr einer Rißbildung in der Klemmhülse 15''' eine genügen große Radialelastizität derselben ergeben. Wenn der Nutgrundsteg 29 in Radialrichtung sehr dünn und in Umfangsrichtung sehr breit gehalten wird - dadurch wird das Klemmhülsenprofil an ein Keilwellenprofil angenähert -, so werden die Nutgrundstege sich beim Aufschrumpfen der Schrumpfmanschette 18 mit ihren mittleren, längsverlaufenden Bereichen alle rinnenartig nach außen wölben können, und zwar ohne die Gefahr, daß die Grenzelastizität seines Werkstoffes überschritten wird. Gleichwohl können die Nutgrundstege 29 auch bei einer solchen Ausgestaltung die Klemmhülse 15''' zumindest in nicht oder in noch nicht vollständig geklemmtem Zustand wirksam stabilisieren und ein Festklemmen in einer genau ausgerichteten Werkzeugstellung bewirken.

## Patentansprüche

1. Standardschaft für rotierende Bearbeitungswerkzeuge der spangebenden Fertigung zur Aufnahme in eine hinsichtlich Form und Rundlaufgenauigkeit präzise gefertigte, vorzugsweise zylindrische Aufnahmeöffnung in der Arbeitsspindel einer Werkzeugmaschine oder zur Aufnahme in eine entsprechende Aufnahmeöffnung eines in eine Arbeitsspindel einsetzbaren Adapters, insbesondere Steilkegeladapters,
- an dem in die Aufnahmeöffnung der Arbeitsspindel oder des Adapters einsetzbaren Ende des Standardschaftes ist ein an seinem Umfang präzise bearbeiteter, rotationssymmetrischer, vorzugsweise zylindrischer Fügezapfen angeschliffen, wobei im Falle einer zylindrischen Aufnahmeöffnung und eines Fügezylinders letzterer nur ein geringes Untermaß gegenüber der zylindrischen Aufnahmeöffnung in der Arbeitsspindel aufweist,
- im Standardschaft ist seinerseits das Bearbeitungswerkzeug mittels einer zylindrischen Preßverbindung dauerhaft fixiert, wobei für eine höchstmögliche Rundlaufgenauigkeit der Arbeitsflächen des Bearbeitungswerkzeuges gegenüber dem Fügezylinder des Standardschaftes gesorgt ist,
- die zylindrische Preßverbindung zwischen Standardschaft und Bearbeitungswerkzeug ist standardschaftseitig durch eine zylindrische, auf einen definierten Durchmesser bearbeitete Aufnahmebohrung und werkzeugseitig durch einen zylindrischen, im Durchmesser auf die Aufnahmebohrung abgestimmten Werkzeugschaft gebildet,
**gekennzeichnet durch** die Gemeinsamkeit
folgender Merkmale:
- der Standardschaft (1) weist im vorderen axialen Bereich der Aufnahmebohrung (24) eine dünnwandige Klemmhülse (15) auf, die monolitisch mit dem sonstigen Werkstoff des Standardschaftes (1) verbunden und - auch - an ihrem Umfang mit einer zylindrischen Außenfläche (20) definierten Außendurchmessers versehen ist,
- auf die Klemmhülse (15) ist eine Schrumpfmanschette (18) aus einer Formgedächtnislegierung aufgeschoben, deren axiale Länge höchstens etwa der der Klemmhülse (15) entspricht,
- die Formgedächtnislegierung ist bezüglich ihrer Zusammensetzung (Legierungstyp) so ausgewählt, daß deren Austenit-Finish-Temperatur unterhalb der Arbeitstemperatur liegt,
- die Schrumpfmanschette (18) hat folgende für die ihr zugedachte Funktion relevante und aufgrund der Formgedächtniseigenschaft ihres Werkstoffes "erinnerbare", herstellungsbedingte Zustände durchlaufen:
- die der Klemmhülse (15) zugewandte Innenfläche (19) der Schrumpfmanschette (18) ist - ausgehend von einem austenitischen Gefügezustand des Werkstoffes der Schrumpfmanschette (18) - auf ein deutliches Untermaß gegenüber dem Außendurchmesser (D) der Klemmhülse (15) bearbeitet, so daß sich bei Paarung der Schrumpfmanschette (18) mit der Außenfläche (20) der Klemmhülse (15) rechnerisch eine hohe Vorspannung darauf ergibt,
- die anschließend durch Unterkühlen in den martensitischem Gefügezustand überführte Schrumpfmanschette (18) ist in Umfangsrichtung so weit gedehnt worden, daß der Durchmesser der Innenfläche (19) der Schrumpfmanschette (18) in martensitischem Gefügezustand ein geringes Übermaß gegenüber der Klemmhülse (15) aufweist und die Schrumpfmanschette (18) auf der Klemmhülse (15) verschiebbar ist.

2. Standardschaft nach Anspruch 1,
**dadurch gekennzeichnet**,
daß die Klemmhülse (15) mit Längsschlitzen (23, 23'') oder mit Längsnuten (30) versehen ist.

3. Standardschaft nach Anspruch 2,
**dadurch gekennzeichnet**,
daß die Längsschlitze (23'') der Klemmhülse (15'') mit schlitzüberbrückenden Reststegen (28) versehen sind, die vorzugsweise örtlich am freien Ende der Klemmhülse (15'') angeordnet sind (Figur 5).

4. Standardschaft nach Anspruch 1,
**dadurch gekennzeichnet**,
daß die Klemmhülse (15) mit einer Schulter (16) in die Außenfläche des Standartschaftes übergeht und daß der Übergang von deren achssenkrechter Fläche (17) zur Klemmhülse (15) zur Abmilderung einer Kerbwirkung sauber ausgerundet ist (Ausrundung 21).

5. Standardschaft nach Anspruch 1,
**dadurch gekennzeichnet**,
daß am Grund der Aufnahmebohrung (24) des Standardschaftes (1) eine nur schwergängig im Standardschaft (1) verschraubbare Einstellschraube (11) zum Justieren der Einstecktiefe (T) des Bearbeitungswerkzeuges (2) in die Aufnahmebohrung (24) angeordnet ist, die vorzugsweise zentrisch auf ihrer ganzen Länge zum Durchlaß von Kühl- und Schmieremulsion axial durchbohrt (9'') ist.

6. Standardschaft nach Anspruch 1,
**dadurch gekennzeichnet**,
daß die Längsschlitze (23) in der Klemmhülse (15) in Einsteckrichtung des Bearbeitungswerkzeuges (2) kürzer (Länge L) sind als die Einstecktiefe (T) des Werkzeugschaftes (12) in die Aufnahmebohrung (24) des Standardschaftes (1).

7. Standardschaft nach Anspruch 1,
**dadurch gekennzeichnet**,
daß die Schrumpfmanschette (18) aus einer Nickel/Titan-Legierung besteht.

8. Standardschaft nach Anspruch 1,
**dadurch gekennzeichnet**,
daß die Schrumpfmanschette (16, 16') aus einer Formgedächtnislegierung mit sog. aufgeweiteter Hysterese besteht, bei der die Martensit-Start-Temperatur und die Austenit-Start-Temperatur um wenigstens 50 bis 80 Grad der Kelvinskala auseinanderliegen.

9. Standardschaft nach Anspruch 1,
**dadurch gekennzeichnet**,
daß die Wandstärke (S) der Schrumpfmanschette (18) mindestens der Wandstärke (s) der Klemmhülse (15), entspricht.
